# EUROPÄISCHE PATENTSCHRIFT

(11) **EP 1 254 584 B1**
(45) Veröffentlichungstag und Bekanntmachung des Hinweises auf die Patenterteilung: **07.05.2008**
(21) Anmeldenummer: 01913591.2
(22) Anmeldetag: 07.02.2001
(51) Int. Cl.: H04Q 11/04, H04J 3/12

(54) **SYSTEM ZUR DATENÜBERMITTLUNG**
DATA COMMUNICATION SYSTEM
SYSTEME DE TRANSMISSION DE DONNEES

(30) Priorität: 10.02.2000 DE 10005793
(43) Veröffentlichungstag der Anmeldung: 06.11.2002
(73) Patentinhaber: Infineon Technologies AG, 81669 München (DE); Siemens Aktiengesellschaft, 80333 Munich (DE)
(72) Erfinder: SCHAUER, Günther, 85716 Unterschleissheim (DE); DAECKE, Dirk, 80469 München (DE); TANNHÄUSER, Armin, 81369 München (DE)
(74) Vertreter: Banzer, Hans-Jörg
(86) Internationale Anmeldenummer: PCT/DE2001/000476
(87) Internationale Veröffentlichungsnummer: WO 2001/060107

(56) Entgegenhaltungen:
- HUBER M N ET AL: "SDSL - AN IDEAL INTERNET AND PHONE ACCESS FOR BUSINESS AND RESIDENTIAL USERS" PROCEEDINGS OF THE BROAD ACCESS CONFERENCE (BAC'99), CRACOW, POLAND, 11. - 13. Oktober 1999, Seiten 126-131, XP001014397
- ETSI TS 101 135 V1.5.2 - TRANSMISSION AND MULTIPLEXING (TM); HIGH-BIT RATE DIGITAL SUBSCRIBER LINE (HDSL) TRANSMISSION SYSTEMS ON METALLIC LOCAL LINES; HDSL CORE SPECIFICATION AND APPLICATIONS FOR COMBINED ISDN-BA AND 2048 KBIT/S TRANSMISSION, September 1999 (1999-09), XP002169795

## Beschreibung

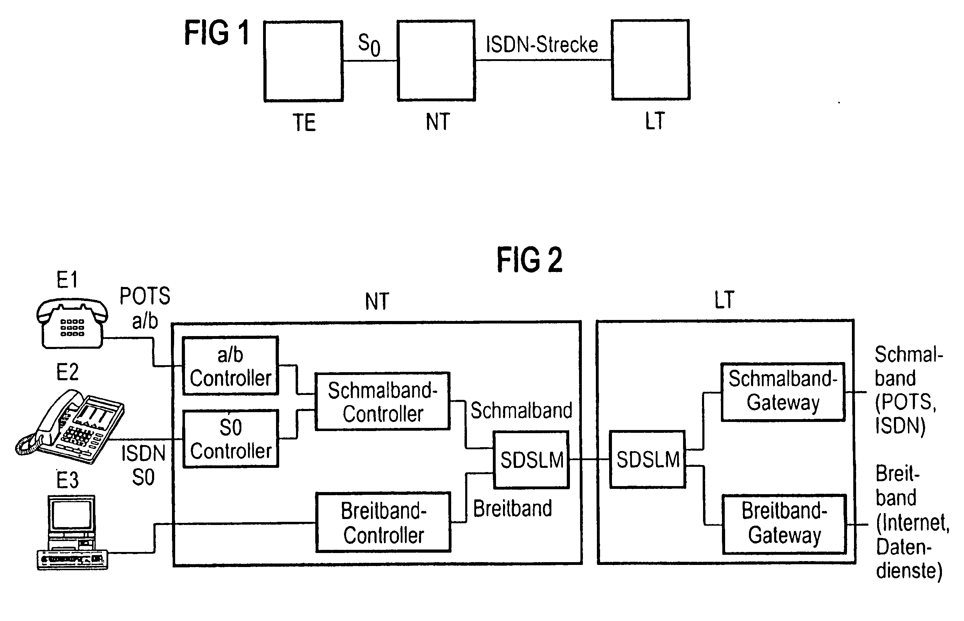

Beim klassischen ISDN-Basisanschluß wird ein Zweidraht-Datenverbindungsweg ausschließlich für den ISDN-Dienst verwendet (siehe Figur 1). Um bestehende Zweidraht-Datenverbindungswege zwischen einem Netzknoten und einem Netzabschluß beim Teilnehmer besser ausnützen zu können, werden in DSL - Digital-Susbscriber-Line-Verbindungen mit höherer Übertragungsgeschwindigkeit gleichzeitig mehrere Dienste auf einer Verbindung beispielsweise in einer Rahmenstruktur verschachtelt übertragen. Für die nachfolgenden Betrachtungen wird ein Datentransport mittels eines SDSL - Symmetric-Digital-Subscriber-Line-Rahmens betrachtet. Es ist bekannt, daß innerhalb dieses Rahmens beispielsweise die Daten einer oder mehrerer Breitbandverbindungen sowie einer oder mehrerer ISDN- oder einer oder mehrerer herkömmlicher Telefonieverbindungen übertragen werden können. Weiterhin ist bekannt, daß für diese Verbindungen der Informationsgehalt der betrieblichen Bits in dem im SDSL-Rahmen vorhandenen eoc-Kanal übertragen werden kann. In ETSI TS 101 135 V1.S.2 werden die SDSL Rahmenstruktur und der eoc-Kanal spezifiert. Den Z-kanälen wird jedoch keine Aufgabe zugeteilt (unused).

Der Erfindung liegt die Aufgabe zugrunde, ein weiteres Verfahren zur Übermittlung der Betriebssteuerbits einer Datenverbindung anzugeben.

Gemäß der Erfindung wird die gestellte Aufgabe durch die Patentansprüche 1 bis 4 gelöst.

Die Erfindung bringt den Vorteil mit sich, daß der Informationsgehalt der betrieblichen Bits aller Verbindungen des Datenrahmens insbesondere auch bei denjenigen Anwendungen zeitgerecht verarbeitet und übermittelt werden kann, bei denen eine beschleunigte Verarbeitung und Übermittlung der betrieblichen Informationen erforderlich ist.

Die Übermittlung der Verbindungssteuerung in einem oder mehreren Z-Kanälen erfolgt mit geringem Zeitbedarf, wodurch auch bei der simultanen Übertragung vieler Telefonieverbindungen die zeitgerechte Übermittlung zeitkritischer Leistungsmerkmale, wie z.B. die Anzeige der Rufnummer des anrufenden Teilnehmers gegeben ist.

Weitere vorteilhafte Ausbildungen des Verfahrens sind in den weiteren Patentansprüchen angegeben.

Weitere Besonderheiten der Erfindung werden aus den nachfolgenden näheren Erläuterungen eines Ausführungsbeispiels und anhand von Zeichnungen ersichtlich.

Es zeigen:
- Figur 1: eine Ausgestaltung einer ISDN-Verbindung,
- Figur 2: eine Ausgestaltung eines SDSL-Netzabschlusses,
- Figur 3: eine Aufteilung eines SDSL-Rahmens,
- Figur 4: ein Ausführungsbeispiel der Aufteilung eines SDSL-Rahmens,
- Figur 5: ein Adressierungsfeld,
- Figur 6: ein weiteres Ausführungsbeispiel der Aufteilung eines SDSL-Rahmens.

In Figur 1 ist eine ISDN-Verbindungsstrecke zwischen einem Endgerät TE und einem Netzknoten LT dargestellt. Zwischen einer insbesondere als Vermittlungsknoten ausgebildeten Leitungsabschlußeinheit LT und einer beim Teilnehmer angeordneten Netzabschlußeinheit NT werden Zweidrahtverbindungsleitungen verwendet.

In Figur 2 ist eine SDSL-Verbindung zwischen einer zweiten Netzabschlußeinheit NT, einem Netzknoten LT und Endgeräten E1, E2 und E3 gezeigt. In dem Netzknoten LT werden die Daten für die Endgeräte aus einem Schmalband- und Breitbandnetz über entsprechende Gateways entnommen bzw. zugeführt und in dem SDSL-Rahmen zusammengefaßt. Die Schmalband- und Breitbanddaten des SDSL-Rahmens werden zwischen einer ersten Leitungsabschlußeinheit LT und der Netzabschlußeinheit NT synchron im Zeitmultiplex übertragen. Die sendeseitige Zusammenfassung und die empfangsseitige Aufteilung der zum Schmalband- oder/und Breitbandnetz gehörenden Daten wird im Modul SDSLM, das auch als Sende-/Empfangseinrichtung bezeichnet werden kann, nach den bekannten Verfahren der digitalen Zeitmultiplextechnik durchgeführt. In der Netzabschlußeinheit NT werden die Breitbanddaten an einen Breitbandcontroller weitergeleitet. Die Schmalbanddaten werden an einen Schmalbandcontroller weitergeleitet, der die relevanten Daten an den nachgeschalteten a/b-Controller für den herkömmlichen Telefonanschluß bzw. an den S₀-Controller für den ISDN-Anschluß weiterleitet.

An der Netzanschlußeinheit NT können dabei ein oder mehrere Breitbandendgeräte, sowie eine oder mehrere ISDN-Anlagen bzw. ein oder mehrere herkömmliche Telefonapparate angeschlossen sein. Dabei ist jeder einzelnen Telefonie-, ISDN- oder Breitbandverbindung jeweils ein eigener a/b-, S₀- oder Breitbandcontroller zugeordnet.

Beispielhaft ist dabei der Endgerätetyp E1 ein herkömmliches Telefon, der Endgerätetyp E2 alternativ eine ISDN-Anlage, und der Endgerätetyp E3 kann eine Datenverarbeitungsanlage sein.

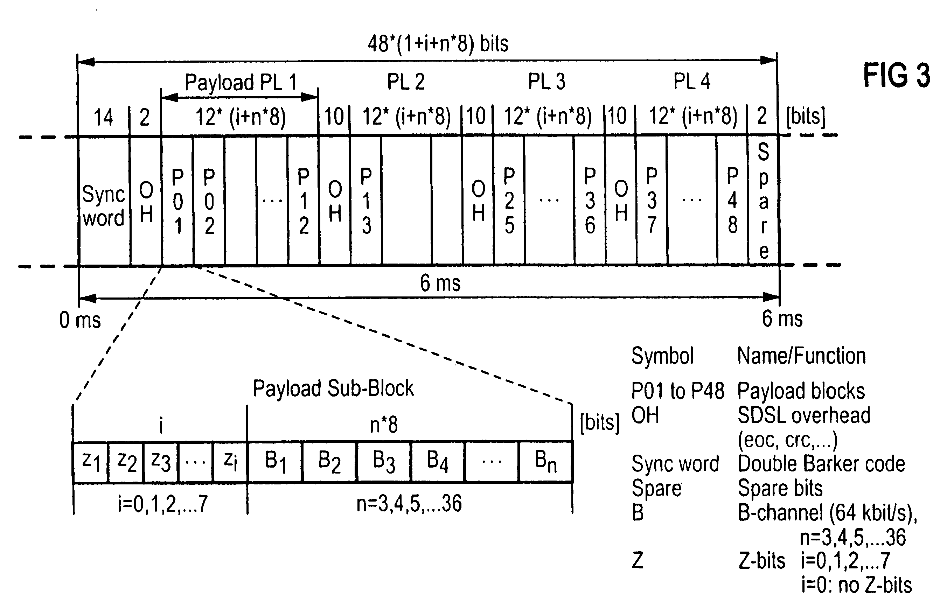

Figur 3 zeigt die bereits bekannte Aufteilung eines SDSL-Rahmens. Der SDSL-Rahmen ist dabei in vorzugsweise vier Payloadblöcke PL1, PL2, PL3 und PL4 unterteilt. Jeder Payloadblock PL1, PL2, PL3, PL4 kann dabei in 12 Unterblöcke P01 bis P12, P13 bis P24, P25 bis P36 und P37 bis P48 untergliedert werden. Jeder Unterblock kann in 1 bis 8 Z-Kanäle mit jeweils 8 kbit/s und 3 bis 36 B-Kanäle mit jeweils 64 kbit/s unterteilt werden.

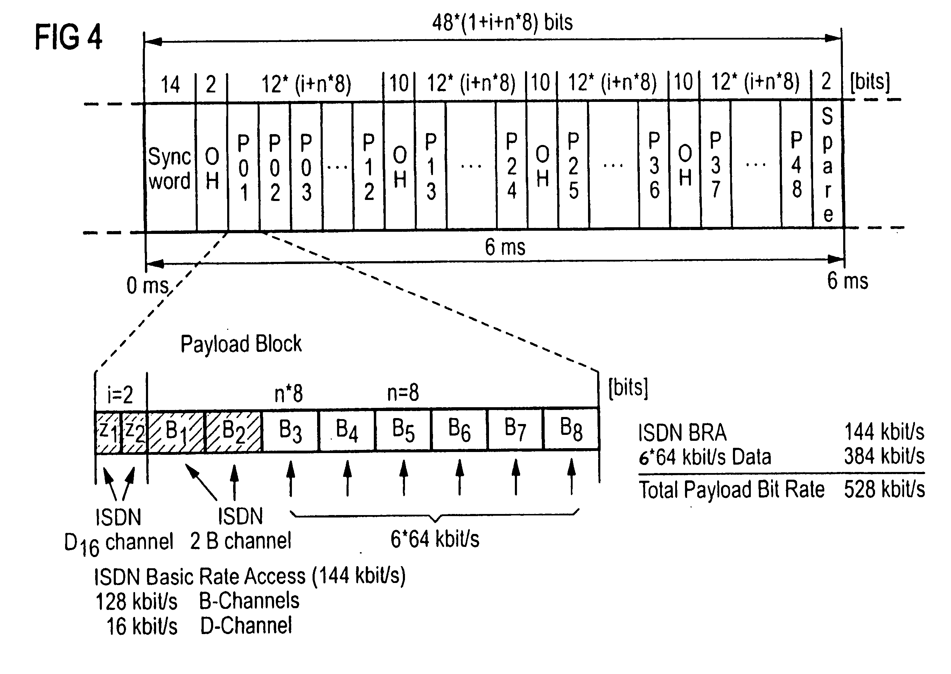

Figur 4 zeigt beispielsweise eine Rahmenaufteilung für eine Nutzung einer ISDN-Verbindung. Die Daten der B1- und B2- Kanäle einer ISDN-Verbindung werden vorzugsweise in zwei 64-kbit/s-B-Kanälen einer SDSL-Verbindung, die Signalisierungsdaten des D-Kanals in zwei 8-kbit/s-Z-Kanälen zusammengefaßt. Der weitere Bereich der Unterblöcke des SDSL-Rahmens wird für weitere Payload-Daten beispielsweise mehrerer ISDN-Verbindungen oder beispielsweise einer oder mehrerer herkömmlicher Telefonieverbindungen oder einer oder mehrerer Breitbandverbindungen verwendet. In diesem Sinn werden im Ausführungsbeispiel von Figur 4 die verbleibenden 6 B-Kanäle des SDSL-Rahmens zu einer 384-kbit/s-Breitbandverbindung zusammengefaßt, die simultan mit der ISDN-Verbindung zur Verfügung steht. In diesem Beispiel werden für beide Verbindungen die Betriebssteuerbits im eoc-Kanal übertragen.

Die digitalisierten Daten einer oder mehrerer analoger Telefonieverbindungen werden in 64-kbit/s-Kanälen übertragen, wobei jeweils einer herkömmlichen Telefonieverbindung genau ein B-Kanal zugeordnet ist. Die Daten einer oder mehrerer Breitbandverbindungen werden in der jeweils benötigten Anzahl von B-Kanälen zusammengefaßt. Hierbei ist lediglich die in Figur 3 festgelegte obere Grenze der Zahl der B-Kanäle zu beachten.

Im Overheadabschnitt OH (siehe Figur 3) des SDSL-Rahmens sind die SDSL-Overheaddaten untergebracht, welche Statusinformationen und einen eingebetteten Steuerungskanal bzw. Betriebskanal, "eoc - embedded-operations-channel", eoc-Kanal, mit einer Übertragungsgeschwindigkeit von etwa 3,3 kbit/s für den Betrieb der SDSL-Übertragungsstrecke beinhalten.

Außerdem beinhaltet der SDSL-Rahmen am Beginn ein 14 Bit breites Rahmenwort (Sync Word) für die Synchronisation und zwei unbenutzte Bits (Spare) am Rahmenende.

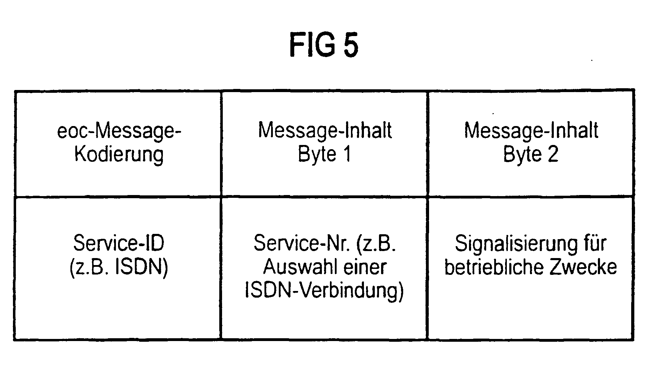

In Figur 5 ist ein bereits bekanntes Beispiel für ein Adressierungsfeld der zur Adressierung der einzelnen ISDN-Verbindungen oder herkömmlichen Telefonverbindungen und Breitbandverbindungen notwendigen eoc-Adresserweiterung angegeben. Dieses Adressfeld weist dabei die Komponenten Service-ID und Service-Nr. auf, welche für eine eindeutige Adressierung der jeweiligen Verbindung notwendig sind. Hierbei wird eine bestimmte Service-Nr. innerhalb eines Service-Typs (z.B. eine aus einer Vielzahl von ISDN-Verbindungen) adressiert.

In einem weiteren Ausführungsbeispiel werden erfindungsgemäß die Betriebssteuerungsbits für die SDSL-Übertragungsstrecke, insbesondere die Verbindungssteuerungsbits für eine oder mehrere Telefonieverbindungen in einem oder mehreren 8-kbit/s-Z-Kanälen übertragen. Dadurch können diese Informationen mindestens 2,5mal schneller als im herkömmlichen eoc-Kanal zum entfernten Leitungsende der SDSL-Strecke übertragen werden. Der resultierende Zeitgewinn ist entscheidend für simultane, zeitgerechte Steuerung einer Vielzahl von herkömmlichen Telefonieverbindungen über eine gemeinsame SDSL-Übertragungsstrecke.

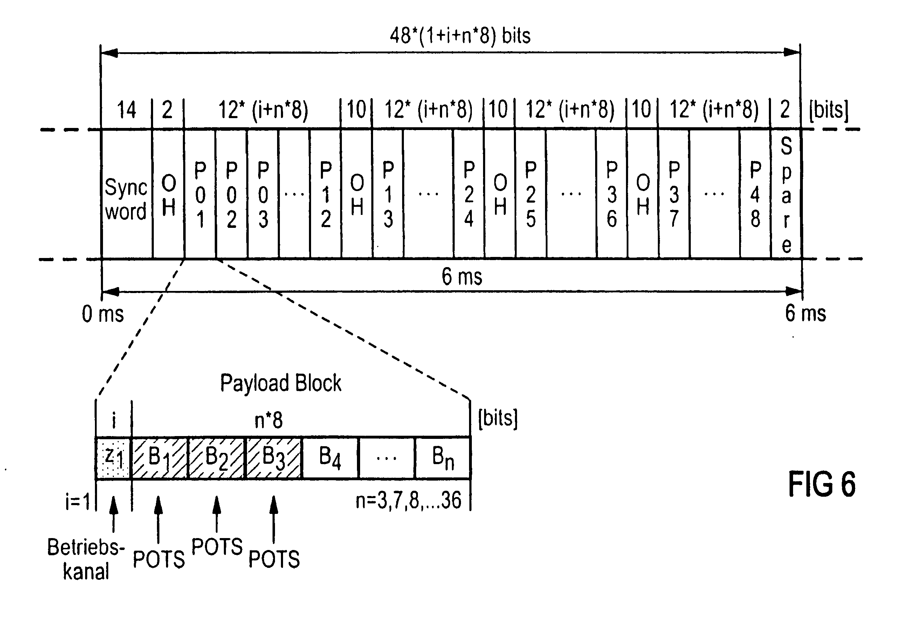

Figur 6 zeigt ein erfindungsgemäßes Ausführungsbeispiel, bei dem innerhalb eines SDSL-Rahmens die digitalisierten Daten von drei herkömmlichen Telefonieverbindungen in drei B-Kanälen mit jeweils 64 kbit/s und die zugehörigen Verbindungssteuerungsbits in einem Z-Kanal mit 8 kbit/s zusammengefaßt sind. Dabei kann die Zahl der auf einer SDSL-Strecke gleichzeitig betriebenen Telefonverbindungen noch wesentlich erhöht werden, da der SDSL-Rahmen gemäß Figur 3 bis zu 36 B-Kanäle und bis zu 8 Z-Kanäle umfassen kann.

Anwendungen dieser Art sind aktuell erneut in den Vordergrund des Interesses der Netzbetreiber gerückt, da sie mit der symmetrischen Zeitmultiplexstruktur des SDSL-Systems besonders kostengünstig zu realisieren sind und da der herkömmliche Telefondienst im Nutzungsumfang der multimedialen Dienste weiterhin mit großem Abstand an der Spitze liegt. Dabei stellt sich die Aufgabe, auch bei hoher Rufbelastung durch eine Vielzahl von Telefonieverbindungen besonders zeitkritische Leistungsmerkmale des Telefoniedienstes, wie beispielsweise die Anzeige der Rufnummer des anrufenden Teilnehmers zeitgerecht sichtbar zu machen.

Diese Aufgaben werden in der erfindungsgemäßen Ausgestaltung mit Übertragung der Verbindungssteuerungsbits in einem oder mehreren Z-Kanälen gelöst.

In einer weiteren Ausgestaltung der Erfindung wird während der Startprozedur zwischen der Verwendung des eoc-Kanals einerseits und eines oder mehrerer Z-Kanäle andererseits für die Betriebssteuerbits nach Wunsch umgeschaltet.

Dies ist beispielsweise dann vorteilhaft, wenn für eine Vielzahl simultaner Telefonieverbindungen entweder die Einhaltung zeitkritischer Bedingungen gewährleistet werden soll oder wenn für nur eine oder wenige simultan zu betreibende Telefonieverbindungen die Zeitbedingungen des eoc-Kanals ausreichen und die freiwerdenden Z-Kanäle für die Nutzdatenübertragung mitverwendet werden sollen.

In einer weiteren vorteilhaften Ausgestaltung wird für die Meldungskodierung und -adressierung im eoc- und in dem oder den Z-Kanälen dasselbe Meldungsformat wie im eoc-Kanal verwendet. Dadurch wird der betriebliche Wechsel zwischen der Verwendung des eoc-Kanals und des oder der Z-Betriebskanäle schaltungstechnisch besonders vereinfacht.

In einer weiteren Ausgestaltung wird durch die Einheit LT innerhalb der Startprozedur beim SDSL-Verbindungsaufbau die Verwendung des eoc-Kanals bzw. des oder der Z-Kanäle sowie die Verwendung der einzelnen Unterkanäle des SDSL-Rahmens in der Abschlußeinheit am fernen Leitungsende, vorzugsweise in der Netzabschlußeinheit NT festgelegt.

## Patentansprüche

1. Verfahren zur Datenübermittlung
bei dem in einer Sende-/Empfangseinheit SDSLM zum Einfügen und Aufteilen von Daten von Typen von Endgeräten (E1, E2, E3) die Daten aller Endgerätetypen zusammen mit den zugehörigen Betriebssteuerbits in einer digitalen Zeitmultiplextechnik synchron in den Rahmen (SDSL) eingefügt und übermittelt werden,
**dadurch gekennzeichnet,**
**dass** die Betriebssteuerbits einem oder mehreren Z-Kanälen des SDSL-Rahmens zugeordnet werden.

2. Verfahren nach Anspruch 1,
**dadurch gekennzeichnet,**
**dass** die Betriebssteuerbits entweder dem eoc-Kanal oder mindestens einem Z-Kanal umschaltbar zugeordnet werden.

3. Verfahren nach einem der vorstehenden Ansprüche,
**dadurch gekennzeichnet,**
**dass** für Meldungskodierung bzw.-adressierung im eoc- oder in den Z-Kanälen jeweils dasselbe Meldungsformat angewendet wird.

4. Verfahren nach einem der Ansprüche 1 oder 2,
**dadurch gekennzeichnet,**
**dass** innerhalb der Startprozedur beim SDSL-Verbindungsaufbau die Zuordnung von eoc- oder Z-Kanälen sowie die Verwendung der einzelnen Unterkanäle des SDSL-Rahmens an die Abschlusseinheit am fernen Leitungsende gemeldet und dadurch in der Abschlusseinheit festgelegt wird.

## Claims

1. A data communication method, in which in a transceiver unit SDSLM for inserting and splitting up data from types of terminals (E1, E2, E3) the data of all types of terminals, together with the associated operational control bits, are synchronously inserted into the frame (SDSL) in digital time-division multiplex, and are transmitted, **characterized in that** the operational control bits are allocated to one or more Z channels of the SDSL frame.

2. The method as claimed in claim 1, **characterized in that** the operational control bits are allocated switchably either to the eoc channel or at least one Z channel.

3. The method as claimed in one of the preceding claims, **characterized in that** in each case the same message format is used for message coding and addressing, respectively, in the eoc channel or in the Z channels.

4. The method as claimed in one of claims 1 or 2, **characterized in that** the allocation of eoc or Z channels and the use of the individual subchannels of the SDSL frame is signaled to the terminating unit at the far line end and, as a result, is defined in the terminating unit, within the start-up procedure during the SDSL connection set-up.

## Revendications

1. Procédé de transmission de données
où, dans une unité d'émission/de réception SDSLM pour l'insertion et le partage de données de types de terminaux (E1, E2, E3), les données de tous les types de terminaux sont insérées avec les bits de commande d'exploitation correspondants d'une technique de multiplexage temporel de manière synchrone dans la trame (SDSL) et transmises,
**caractérisé**
**en ce que** les bits de commande d'exploitation sont affectés à un ou à plusieurs canaux Z de la trame SDSL.

2. Procédé selon la revendication 1,
**caractérisé**
**en ce que** les bits de commande d'exploitation sont affectés par commutation soit au canal eoc, soit à au moins un canal Z.

3. Procédé selon l'une des revendications précédentes,
**caractérisé**
**en ce que** le même format de message est utilisé pour le codage ou l'adressage de message dans le canal eoc ou les canaux Z.

4. Procédé selon l'une des revendications 1 et 2,
**caractérisé**
**en ce que** pendant la procédure de démarrage lors de l'établissement de la connexion SDSL, l'affectation du canal eoc ou des canaux Z ainsi que l'utilisation des différents sous-canaux de la trame SDSL sont déclarées au termineur à l'extrémité de ligne à distance, et fixées ainsi dans le termineur.
